# EUROPEAN PATENT SPECIFICATION

(11) **EP 2 100 159 B1**
(45) Date of publication and mention of the grant of the patent: **14.08.2013**
(21) Application number: 08707005.8
(22) Date of filing: 09.01.2008
(51) Int. Cl.: G08G 1/01, G08G 1/0968, G01C 21/26, G01S 5/00

(54) **A navigation device and method for improving a time to identify a location of the navigation device**
Navigationsvorrichtung und -verfahren zur Verkürzung der Zeit bis zur Bestimmung eines Standortes der Navigationsvorrichtung
Dispositif de navigation et procédé pour raccourcir le temps nécessaire à la détermination de l'emplacement du dispositif de navigation

(30) Priority: 10.01.2007 US 879543 P; 10.01.2007 US 879541 P; 10.01.2007 US 879593 P; 10.01.2007 US 879598 P
(43) Date of publication of application: 16.09.2009
(73) Proprietor: TomTom International B.V., 1017 CT Amsterdam (NL)
(72) Inventor: BLACKWOOD, Adrian, Kyle, NL-2512 GC Den Haag (NL)
(74) Representative: Dobson, Adrian
(86) International application number: PCT/EP2008/000187
(87) International publication number: WO 2008/083984

(56) References cited:
- US-A1- 2002 082 774
- US-B1- 6 204 808

## Description

### Field

The present application generally relates to navigation methods and devices.

### Background

Navigation devices were traditionally utilized to provide services in vehicles or even on foot, for navigating between two points. Such devices, when used in vehicles, relied on an input or desired destination and a detected or determined GPS/GPRS location signal, to identify an initial location of the navigation device.

The document US 2002/082774 A1 discloses a mobile terminal with a GPS receiver, a processor for establishing a minimum level for a parameter of quality of service, the parameter identifying a time to first fix, and for determining whether or not the established minimum level is met upon initialising the mobile navigation terminal. If the established minimum level was not met, a radio transceiver downloads an aiding data file (such as e.g. satellite almanac data) via a land-based mobile communication network from a server, to aid the system in meeting the established minimum level.

### SUMMARY

The inventors of the present application discovered that determination of this GPS/GPRS location signal, to identify an initial location of the navigation device, could be slow. Further, they discovered a need to both increase the speed to obtain this signal and a need to do so in an efficient manner.

Besides a quick startup of the navigation device, also an accurate navigation functioning optimized for different routes would be desirable.

The method according to appended claim 1 and the navigation device according to appended claim 13 aim at achieving these objects.

The inventors discovered that, although known manners existed to improve speed of identifying a location of the navigation device upon powering on (such as by use of an LTO (Long Term Orbit) Satellite Location Data File, Optimized from OTA (Over The Air) transmission. LTO files are also described as QuickFixGPS files by both TomTom and other Navigation Industry Manufacturers, Analyst, etc.) files, obtaining such information could occupy a great deal of memory and could slow down the start up process of the navigation device.

LTO, Long Term Orbit, Data Files use a set of [GPS} satellite location strings, based on the user's current geographic location, used by the navigation device to more accurately determine satellite locations. This results in a decrease of TtFF (Time to First Fix location signal acquisition), namely the time that it takes a navigation device to first obtain its location information after being powered up or turned on.

This system relies on LIFO, Last in First Out, file management. The LTO file is created using geostationary ground-based calculations to determine satellite locations, and covers a specific period of time. Most LTO files cover standard periods of 1, 3, 5, and 10 day LTO files. This means, while the file is valid, the navigation device can benefit from increased TtFF in both same location power on, and new location power on startup and acquisitions sequences.

LTO Files naturally degradate. This means over the duration of the file validity, the LTO file itself become less accurate, thus decreeing the known satellite location information, and decreeing the assistance LTO files give to reducing TtFF.

This occurs from minute changes in the earths rotation from the calculations used to determine the satellite locations. In most cases, TtFF is faster in signal acquisition with a LTO file about to expire, than without a LTO file.

Typically, LTO File Length also determines the amount of degradation, for example, a I day file will see very little degradation, a 3 day file will be more accurate the first day, slightly less on the second day and even slightly less on the third day.

Current LTO File Delivery systems rely on simple time based expiry, wherein the navigation device, through the processor determines the LTO file will expire, and on a preset time before expiry, may request a new, updated LTO file from the server. The process may be automated, and upload sequences can occur without user input or selection. LTO file length selection may again be a process that is automated, and file length selection may occur without user input or selection.

In at least one embodiment of the present application, at least one of the current problems is improved upon or even solved by instituting LTO File Management, including File Degradation, and Logic Based Rules Governing QOS, Quality of Service. LTO File Systems may be based on LIFO, memory HW restriction and is therefore a preset amount or limitation of File management may be determined by memory space constraints, noting however, that LTO files are typically relatively small, ranging fro 5 to 50 mbs. LTO Files are not necessary in a navigation device. A Navigation device will work without them. However, TtFF may be greatly improved by their use, and thus the accuracy in location capture and reporting may also be greatly improved with the use of LTO files. In a device Start-up Sequence in Same Location of the navigation device, the LTO files are valid for a duration. As such, if a user were to download the file on Day 1, on Day 3, (Dependant on LTO File Length) the file may still be valid, and may still be used to reduce TtFF.

In device Start-up Sequence in New/Different Location of the navigation device, LTO files download time is, in most cases, less than the time required for the navigation device to gain a satellite fix unassisted, and are valid for a duration, and as such if a user were to download the file on Day 1, on Day 3, (Dependant on LTO File Length) the file is still valid, and still used to reduce TtFF.

In at least one embodiment of the present application, a method includes establishing a time in which to identify a location of a navigation device upon powering on the navigation device; determining an elapsed time, from powering on the navigation device, to identify the location of the navigation device; and obtaining information, to improve the time in which to identify the location upon powering on of the navigation device, upon determining that the elapsed time is below the established time.

In at least one embodiment of the present application, a method includes establishing a minimum level for a parameter of quality of service of a navigation device; determining, upon powering on the navigation device, whether or not the navigation device meets the established minimum level; and obtaining information, to aid the navigation device in meeting the established minimum level, upon determining that the established minimum level was not met.

In at least one embodiment of the present application, a navigation device includes means for establishing a time in which to identify a location of the navigation device upon powering on the navigation device; means for determining an elapsed time, from powering on the navigation device, to identify the location of the navigation device; and means for obtaining information, to improve the time in which to identify the location upon powering on of the navigation device, upon the means for determining determining that the elapsed time is below the established time.

In at least one embodiment of the present application, a navigation device includes means for establishing a minimum level for a parameter of quality of service of the navigation device; means for determining, upon powering on the navigation device, whether or not the navigation device meets the established minimum level; and means for obtaining information, to aid the navigation device in meeting the established minimum level, upon the means for determining determining that the established minimum level was not met.

In at least one embodiment of the present application, a navigation device includes a processor to establish a time in which to identify a location of the navigation device upon powering on the navigation device and to determine an elapsed time, from powering on the navigation device, to identify the location of the navigation device; and a receiver to obtain information, to improve the time to identify the location upon powering on of a navigation device, upon the processor determining that the elapsed time is below the established time.

In at least one embodiment of the present application, a navigation device includes a processor to establish a minimum level for a parameter of quality of service of a navigation device and to determine, upon powering on the navigation device, whether or not the navigation device meets the established minimum level; and a receiver to obtain information, to aid the navigation device in meeting the established minimum level, upon the processor determining that the established minimum level was not met.

### BRIEF DESCRIPTION OF THE DRAWINGS

The present application will be described in more detail below by using example embodiments, which will be explained with the aid of the drawings, in which:
Figure 1 illustrates an example view of a Global Positioning System (GPS);
Figure 2 illustrates an example block diagram of electronic components of a navigation device of an embodiment of the present application;
Figure 3 illustrates an example block diagram of a server, navigation device and connection therebetween of an embodiment of the present application;
Figures 4A and 4B are perspective views of an actual implementation of an embodiment of the navigation device 200;
Figure 5 is a flowchart showing a method of a first embodiment of the present application; and
Figure 6 is a flowchart showing a method of a first embodiment of the present application.

### DETAILED DESCRIPTION OF THE EXAMPLE EMBODIMENTS

The terminology used herein is for the purpose of describing particular embodiments only and is not intended to be limiting of the present invention. As used herein, the singular forms "a", "an", and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof. In describing example embodiments illustrated in the drawings, specific terminology is employed for the sake of clarity. However, the disclosure of this patent specification is not intended to be limited to the specific terminology so selected.

Referencing the drawings, wherein like reference numerals designate identical or corresponding parts throughout the several views, example embodiments of the present patent application are hereafter described. Like numbers refer to like elements throughout. As used herein, the term "and/or" includes any and all combinations of one or more of the associated listed items.

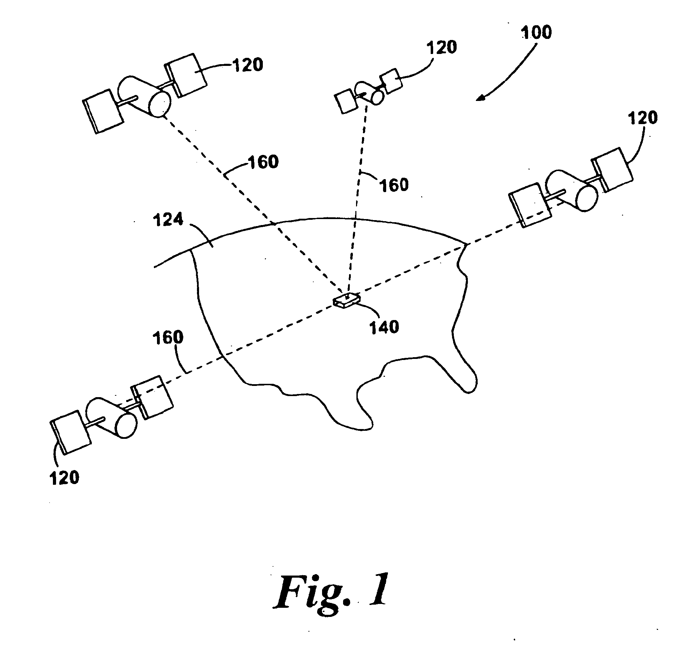

Figure 1 illustrates an example view of Global Positioning System (GPS), usable by navigation devices, including the navigation device of embodiments of the present application. Such systems are known and are used for a variety of purposes. In general, GPS is a satellite-radio based navigation system capable of determining continuous position, velocity, time, and in some instances direction information for an unlimited number of users.

Formerly known as NAVSTAR, the GPS incorporates a plurality of satellites which work with the earth in extremely precise orbits. Based on these precise orbits, GPS satellites can relay their location to any number of receiving units.

The GPS system is implemented when a device, specially equipped to receive GPS data, begins scanning radio frequencies for GPS satellite signals. Upon receiving a radio signal from a GPS satellite, the device determines the precise location of that satellite via one of a plurality of different conventional methods. The device will continue scanning, in most instances, for signals until it has acquired at least three different satellite signals (noting that position is not normally, but can be determined, with only two signals using other triangulation techniques). Implementing geometric triangulation, the receiver utilizes the three known positions to determine its own two-dimensional position relative to the satellites. This can be done in a known manner. Additionally, acquiring a fourth satellite signal will allow the receiving device to calculate its three dimensional position by the same geometrical calculation in a known manner. The position and velocity data can be updated in real time on a continuous basis by an unlimited number of users.

As shown in Figure 1, the GPS system is denoted generally by reference numeral 100. A plurality of satellites 120 are in orbit about the earth 124. The orbit of each satellite 120 is not necessarily synchronous with the orbits of other satellites 120 and, in fact, is likely asynchronous. A GPS receiver 140, usable in embodiments of navigation devices of the present application, is shown receiving spread spectrum GPS satellite signals 160 from the various satellites 120.

The spread spectrum signals 160, continuously transmitted from each satellite 120, utilize a highly accurate frequency standard accomplished with an extremely accurate atomic clock. Each satellite 120, as part of its data signal transmission 160, transmits a data stream indicative of that particular satellite 120. It is appreciated by those skilled in the relevant art that the GPS receiver device 140 generally acquires spread spectrum GPS satellite signals 160 from at least three satellites 120 for the GPS receiver device 140 to calculate its two-dimensional position by triangulation. Acquisition of an additional signal, resulting in signals 160 from a total of four satellites 120, permits the GPS receiver device 140 to calculate its three-dimensional position in a known manner.

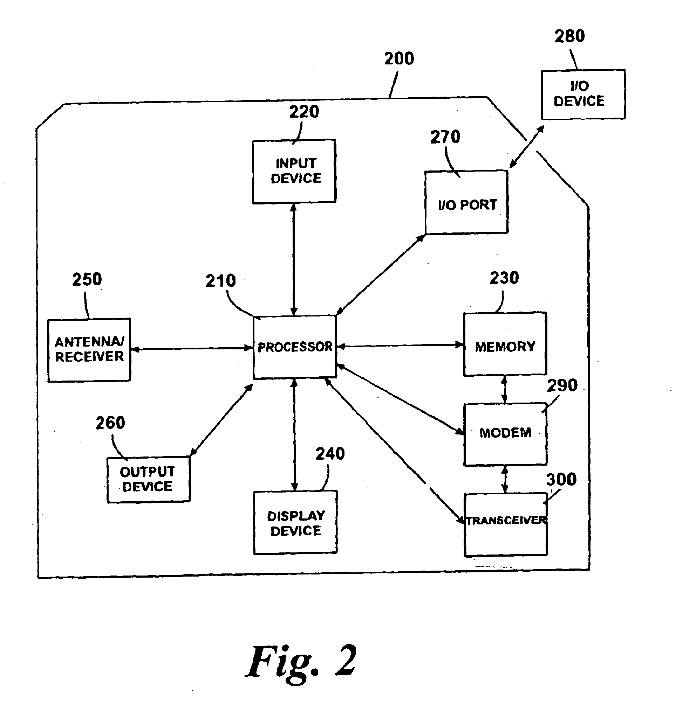

Figure 2 illustrates an example block diagram of electronic components of a navigation device 200 of an embodiment of the present application, in block component format. It should be noted that the block diagram of the navigation device 200 is not inclusive of all components of the navigation device, but is only representative of many example components.

The navigation device 200 is located within a housing (not shown). The housing includes a processor 210 connected to an input device 220 and a display screen 240. The input device 220 can include a keyboard device, voice input device, touch panel and/or any other known input device utilized to input information; and the display device 240 can include any type of display screen such as an LCD display, for example. In at least one embodiment of the present application, the input device 220 and display device 240 are integrated into an integrated input and display device, including a touchpad or touchscreen input wherein a user need only touch a portion of the display device 240 to select one of a plurality of display choices or to activate one of a plurality of virtual buttons.

In addition, other types of output devices 260 can also include, including but not limited to, an audible output device. As output device 260 can produce audible information to a user of the navigation device 200, it is equally understood that input device 240 can also include a microphone and software for receiving input voice commands as well.

In the navigation device 200, processor 210 is operatively connected to and set to receive input information from input device 240 via a connection, and operatively connected to at least one of display device 240 and output device 260, via connections to output information thereto. Further, the processor 210 is operatively connected to memory 230 via a connection and is further adapted to receive/send information from/to input/output (I/O) ports 270 via a connection, wherein the I/O port 270 is connectible to an I/O device 280 external to the navigation device 200. The external I/O device 270 may include, but is not limited to an external listening device such as an earpiece for example. The connection to I/O device 280 can further be a wired or wireless connection to any other external device such as a car stereo unit for hands-free operation and/or for voice activated operation for example, for connection to an ear piece or head phones, and/or for connection to a mobile phone for example, wherein the mobile phone connection may be used to establish a data connection between the navigation device 200 and the internet or any other network for example, and/or to establish a connection to a server via the internet or some other network for example. In at least one embodiment, the navigation device 200 includes an internal modem 290, connected to processor 210 and memory 230, for establishing data connections as will be described hereafter. The modem 290 may further be connected to transceiver 300 for transmitting information to and receiving information from server 302. The transceiver 300 is further connected to processor 210.

The navigation device 200, in at least one embodiment, may establish a "mobile" network connection with the server 302 via an external mobile device not shown (such as a mobile phone, PDA, and/or any device with mobile phone technology) establishing a digital connection (such as a digital connection via known Bluetooth technology for example). Thereafter, through its network service provider, the mobile device can establish a network connection (through the internet for example) with a server 302. As such, a "mobile" network connection may be established between the navigation device 200 (which can be, and often times is mobile as it travels alone and/or in a vehicle) and the server 302 to provide a "real-time" or at least very "up to date" gateway for information.

The establishing of the network connection between the mobile device (via a service provider) and another device such as the server 302, using the internet for example, can be done in a known manner. This can include use of TCP/IP layered protocol for example. The mobile device can utilize any number of communication standards such as CDMA, GSM, WAN, etc.

As such, an internet connection may be utilized which is achieved via data connection, via a mobile phone or mobile phone technology within the navigation device 200 for example. For this connection, an internet connection between the server 302 and the navigation device 200 is established. This can be done, for example, through a mobile phone or other mobile device and a GPRS (General Packet Radio Service)-connection (GPRS connection is a high-speed data connection for mobile devices provided by telecom operators; GPRS is a method to connect to the internet.

The navigation device 200 can further complete a data connection with the mobile device, and eventually with the internet and server 302, via existing Bluetooth technology for example, in a known manner, wherein the data protocol can utilize any number of standards, such as the GSRM, the Data Protocol Standard for the GSM standard, for example.

For GRPS phone settings, the Bluetooth enabled device may be used to correctly work with the ever changing spectrum of mobile phone models, manufacturers, etc., model/manufacturer specific settings may be stored on the navigation device 200 for example. The data stored for this information can be updated in a manner discussed in any of the embodiments, previous and subsequent.

The navigation device 200 may include its own mobile phone technology within the navigation device 200 itself (including an antenna for example, wherein the internal antenna of the navigation device 200 can further alternatively be used). The mobile phone technology within the navigation device 200 can include internal components as specified above, and/or can include an insertable SIM (subscriber identity module) card, complete with necessary mobile phone technology and/or an antenna for example. As such, mobile phone technology within the navigation device 200, in conjunction with modem 290, can similarly establish a network connection between the navigation device 200 and the server 302, via the internet for example, in a manner similar to that of any mobile device. It should be noted that such a modem 290 can be internal to the navigation device 200, or external thereto, such as in an adapter for example, see U.S. application serial number 11/907,254 entitled "Enhanced Cigarette Lighter Adapter" and filed October 10, 2007.

If located in the adapter, upon the adapter being plugged in to a vehicle for example, power can be supplied to the navigation device 200. In addition, the modem can then be triggered to establish a network connection with the server 200 to send information thereto and receive information therefrom.

Figure 2 further illustrates an operative connection between the processor 210 and an antenna/receiver 250, wherein the antenna/receiver 250 can be a GPS antenna/receiver for example. It will be understood that the antenna and receiver designated by reference numeral 250 are combined schematically for illustration, but that the antenna and receiver may be separately located components, and that the antenna may be a GPS patch antenna or helical antenna for example.

Further, it will be understood by one of ordinary skill in the art that the electronic components shown in Figure 2 are powered by power sources (not shown) in a conventional manner. As will be understood by one of ordinary skill in the art, different configurations of the components shown in Figure 2 are considered within the scope of the present application. For example, in one embodiment, the components shown in Figure 2 may be in communication with one another via wired and/or wireless connections and the like. Thus, the scope of the navigation device 200 of the present application includes a portable or handheld navigation device 200.

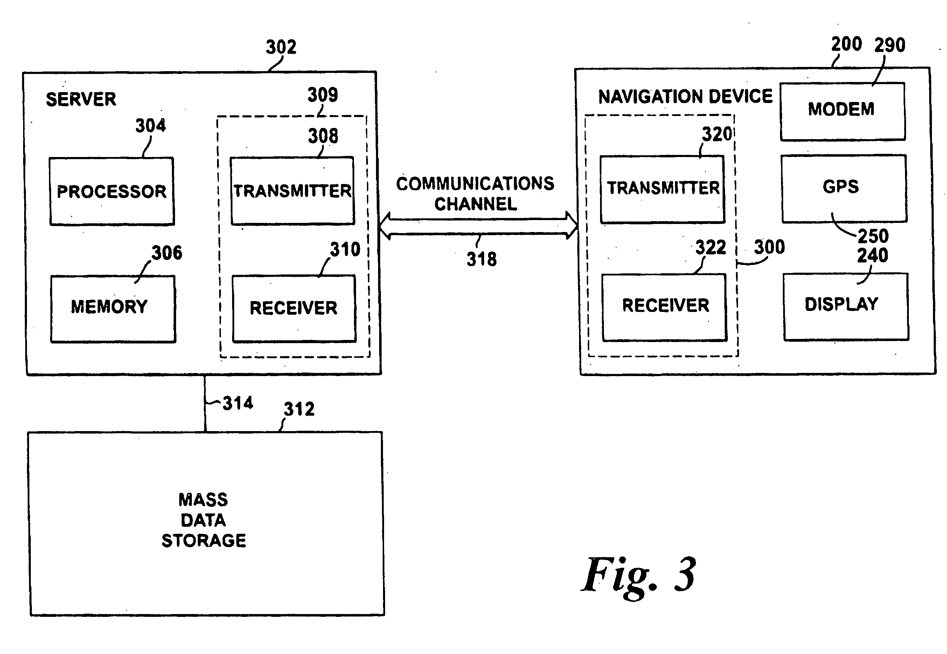

Figure 3 illustrates an example block diagram of a server 302 and a navigation device 200 of the present application, via a generic communications channel 318, of an embodiment of the present application. The server 302 and a navigation device 200 of the present application can communicate when a connection via communications channel 318 is established between the server 302 and the navigation device 200 (noting that such a connection can be a data connection via mobile device, a direct connection via personal computer via the internet, a data connection via modem 290, etc.).

The server 302 includes, in addition to other components which may not be illustrated, a processor 304 operatively connected to a memory 306 and further operatively connected, via a wired or wireless connection 314, to a mass data storage device 312. The processor 304 is further operatively connected to transmitter 308 and receiver 310, to transmit and send information to and from navigation device 200 via communications channel 318. The signals sent and received may include data, communication, and/or other propagated signals. Information received by server 302 can include but is not limited to received information relating to changes in position and speed of a vehicle housing a navigation device 200; and information sent by the server 302 can include but is not limited to calculated traffic information and/or other information relating to potential delays along a route of travel of a vehicle in which a navigation device 200 is located. The transmitter 308 and receiver 310 may be selected or designed according to the communications requirement and communication technology used in the communication design for the navigation system 200. Further, it should be noted that the functions of transmitter 308 and receiver 310 may be combined into a signal transceiver 309.

Server 302 is further connected to (or includes) a mass storage device 312, noting that the mass storage device 312 may be coupled to the server 302 via communication link 314. The mass storage device 312 contains a store of navigation data and map information, and can again be a separate device from the server 302 or can be incorporated into the server 302.

The navigation device 200 is adapted to communicate with the server 302 through any communications channel generally designated by 318, and includes processor, memory, etc. as previously described with regard to Figure 2, as well as transmitter 320 and receiver 322 to send and receive signals and/or data through the communications channel 318, noting that these devices can further be used to communicate with devices other than server 302. Further, the transmitter 320 and receiver 322 are selected or designed according to communication requirements and communication technology used in the communication design for the navigation device 200 and the functions of the transmitter 320 and receiver 322 may be combined into a single transceiver 300.

Software stored in server memory 306 provides instructions for the processor 304 and allows the server 302 to provide services to the navigation device 200, such as calculation and transmission of traffic information and/or other information relating to potential delays along a route of travel of a vehicle in which a navigation device 200 is located. One service provided by the server 302 involves processing requests from the navigation device 200 and transmitting navigation data from the mass data storage 312 to the navigation device 200. According to at least one embodiment of the present application, another service provided by the server 302 includes processing the navigation data using various algorithms for a desired application (such as calculation of traffic information and/or other information relating to potential delays along a route of travel of a vehicle in which a navigation device 200 is located for example) and sending the results of these calculations to the navigation device 200.

The communication channel 318 generically represents the propagating medium or path that connects the navigation device 200 and the server 302. According to at least one embodiment of the present application, both the server 302 and navigation device 200 include a transmitter for transmitting data through the communication channel and a receiver for receiving data that has been transmitted through the communication channel.

The communication channel 318 is not limited to a particular communication technology. Additionally, the communication channel 318 is not limited to a single communication technology; that is, the channel 318 may include several communication links that use a variety of technology. For example, according to at least one embodiment, the communication channel 318 can be adapted to provide a path for electrical, optical, and/or electromagnetic communications, etc. As such, the communication channel 318 includes, but is not limited to, one or a combination of the following: electric circuits, electrical conductors such as wires and coaxial cables, fiber optic cables, converters, radio-frequency (rf) waves, the atmosphere, empty space, etc. Furthermore, according to at least one various embodiment, the communication channel 318 can include intermediate devices such as routers, repeaters, buffers, transmitters, and receivers, for example.

In at least one embodiment of the present application, for example, the communication channel 318 includes telephone and computer networks. Furthermore, in at least one embodiment, the communication channel 318 may be capable of accommodating wireless communication such as radio frequency, microwave frequency, infrared communication, etc. Additionally, according to at least one embodiment, the communication channel 318 can accommodate satellite communication. Additionally, according to at least one embodiment, the communication channel 318 can accommodate multiple, independent satellite systems, and GPS receivers capable of multiple frequencies and signal acquisitions. (Covers impending addition of Multiple Satellite Systems, including, but no limited to; GLONASS, GPS 2, GPS 2.5 - 3, Galileo and ChinaSat).

The communication signals transmitted through the communication channel 318 include, but are not limited to, signals as may be required or desired for given communication technology. For example, the signals may be adapted to be used in cellular communication technology such as Time Division Multiple Access (TDMA), Frequency Division Multiple Access (FDMA), Code Division Multiple Access (CDMA), Global System for Mobile Communications (GSM), etc. Both digital and analogue signals can be transmitted through the communication channel 318. According to at least one embodiment, these signals may be modulated, encrypted and/or compressed signals as may be desirable for the communication technology.

The mass data storage 312 includes sufficient memory for the desired navigation applications. Examples of the mass data storage 312 may include magnetic data storage media such as hard drives for example, optical storage media such as CD-Roms for example, charged data storage media such as flash memory for example, molecular memory, etc.

According to at least one embodiment of the present application, the server 302 includes a remote server accessible by the navigation device 200 via a wireless channel. According to at least one other embodiment of the application, the server 302 may include a network server located on a local area network (LAN), wide area network (WAN), virtual private network (VPN), etc.

According to at least one embodiment of the present application, the server 302 may include a personal computer such as a desktop or laptop computer, and the communication channel 318 may be a cable connected between the personal computer and the navigation device 200. Alternatively, a personal computer may be connected between the navigation device 200 and the server 302 to establish an internet connection between the server 302 and the navigation device 200. Alternatively, a mobile telephone or other handheld device (and/or a modem such as modem 290) may establish a wireless connection to the internet, for connecting the navigation device 200 to the server 302 via the internet.

The navigation device 200 may be provided with information from the server 302 via information downloads which may be periodically updated upon a user connecting navigation device 200 to the server 302 and/or may be more dynamic upon a more constant or frequent connection being made between the server 302 and navigation device 200 via a wireless mobile connection device and TCP/IP connection for example. For many dynamic calculations, the processor 304 in the server 302 may be used to handle the bulk of the processing needs, however, processor 210 of navigation device 200 can also handle much processing and calculation, oftentimes independent of a connection to a server 302.

The mass storage device 312 connected to the server 302 can include volumes more cartographic and route data than that which is able to be maintained on the navigation device 200 itself, including maps, etc. The server 302 may process, for example, the majority of the devices of a navigation device 200 which travel along the route using a set of processing algorithms. Further, the cartographic and route data stored in memory 312 can operate on signals (e.g. GPS signals), originally received by the navigation device 200.

As indicated above in Figure 2 of the application, a navigation device 200 of an embodiment of the present application includes a processor 210, an input device 220, and a display screen 240. In at least one embodiment, the input device 220 and display screen 240 are integrated into an integrated input and display device to enable both input of information (via direct input, menu selection, etc.) and display of information through a touch panel screen, for example. Such a screen may be a touch input LCD screen, for example, as is well known to those of ordinary skill in the art. Further, the navigation device 200 can also include any additional input device 220 and/or any additional output device 240, such as audio input/output devices for example.

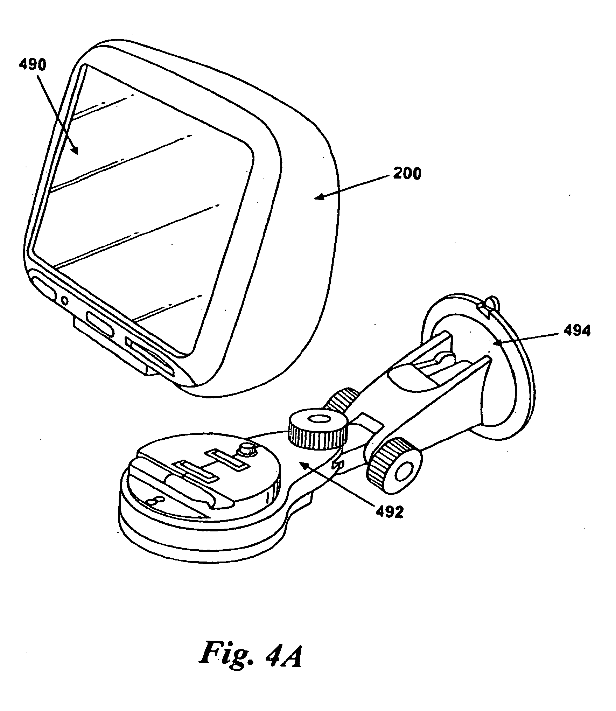

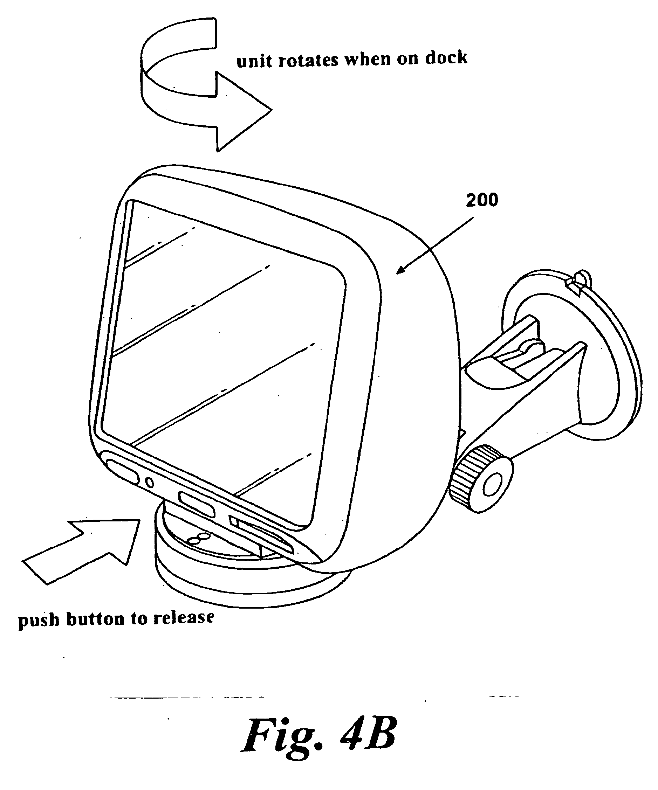

Figures 4A and 4B are perspective views of an actual implementation of an embodiment of the navigation device 200. As shown in Fig. 4A, the navigation device 200 may be a unit that includes an integrated input and display device 290 (a touch panel screen for example) and the other components of figure 2 (including but not limited to internal GPS receiver 250, microprocessor 210, a power supply, memory systems 220, etc.).

The navigation device 200 may sit on an arm 292, which itself may be secured to a vehicle dashboard/window/etc. using a large suction cup 294. This arm 292 is one non-limiting example of a docking station to which the navigation device 200 can be docked.

As shown in Fig. 4B, the navigation device 200 can be docked or otherwise connected to an arm 292 of the docking station by snap connecting the navigation device 292 to the arm 292 for example (this is only one example, as other known alternatives for connection to a docking station are within the scope of the present application). The navigation device 200 may then be rotatable on the arm 292, as shown by the arrow of Fig. 4B. To release the connection between the navigation device 200 and the docking station, a button on the navigation device 200 may be pressed, for example (this is only one example, as other known alternatives for disconnection to a docking station are within the scope of the present application).

The navigation device 200, in at least one embodiment, may establish a "mobile" network connection with the server 302 via a mobile device 400 (such as a mobile phone, PDA, and/or any device with mobile phone technology) establishing a digital connection (such as a digital connection via known Bluetooth technology for example). Thereafter, through its network service provider, the mobile device 400 can establish a network connection (through the internet for example) with a server 302. As such, a "mobile" network connection is established between the navigation device 200 (which can be, and often times is mobile as it travels alone and/or in a vehicle) and the server 302 to provide a "real-time" or at least very "up to date" gateway for information.

The establishing of the network connection between the mobile device 400 (via a service provider) and another device such as the server 302, using the internet 410 for example, can be done in a known manner. This can include use of TCP/IP layered protocol for example. The mobile device 400 can utilize any number of communication standards such as CDMA, GSM, WAN, etc.

As such, an internet connection may be utilized which is achieved via data connection, via a mobile phone or mobile phone technology within the navigation device 200 for example. For this connection, an internet connection between the server 302 and the navigation device 200 is established. This can be done, for example, through a mobile phone or other mobile device and a GPRS (General Packet Radio Service)-connection (GPRS connection is a high-speed data connection for mobile devices provided by telecom operators; GPRS is a method to connect to the internet).

The navigation device 200 can further complete a data connection with the mobile device 400, and eventually with the internet 410 and server 302, via existing Bluetooth technology for example, in a known manner, wherein the data protocol can utilize any number of standards, such as the GSRM, the Data Protocol Standard for the GSM standard, for example.

The navigation device 200 may include its own mobile phone technology within the navigation device 200 itself (including an antenna for example, wherein the internal antenna of the navigation device 200 can further alternatively be used). The mobile phone technology within the navigation device 200 can include internal components as specified above, and/or can include an insertable card, complete with necessary mobile phone technology and/or an antenna for example. As such, mobile phone technology within the navigation device 200 can similarly establish a network connection between the navigation device 200 and the server 302, via the internet 410 for example, in a manner similar to that of any mobile device 400.

For GRPS phone settings, the Bluetooth enabled device may be used to correctly work with the ever changing spectrum of mobile phone models, manufacturers, etc., model/manufacturer specific settings may be stored on the navigation device 200 for example. The data stored for this information can be updated in a manner discussed in any of the embodiments, previous and subsequent.

In an embodiment of the present application, a method includes establishing a time in which to identify an initial location of a navigation device 200 upon powering on the navigation device 200; determining an elapsed time, from powering on the navigation device 200, to identify the location of the navigation device 200; and obtaining information, to improve the time in which to identify the initial location upon powering on of a navigation device 200, upon determining that the elapsed time is below the established time. In an embodiment of the present application, once the navigation device 200 is purchased and turned on, a data (e.g. internet) connection between the receiver 250 and the GPS (GPRS, and all terrestrial data transfer methods, as well as home dock and pier to pier) satellite is established to permit receipt of information indicating an initial position of the navigation device 200. The time that it takes for the navigation device 200 to obtain this initial position each time the navigation device 200 is turned on is known as the "time to first fix" (TtFF), as described above in detail.

As shown in Figure 5, a method of an embodiment of the present application is first directed to establishing a time in step S500 to identify a location of the navigation device 200 upon powering on the navigation device 200. For example, in an embodiment of the present application, a quality of service (QOS) parameter may be established, identifying such a time (how fast, from power turn on, should it take to identify a location of the navigation device 200). Further, the memory 230 and processor 210 of the navigation device 200 may be coded to store such an established quality level. As such, the establishing may include setting a code inside the navigation device 200. Further, the memory 230 and processor 210 of the navigation device 200 may be coded to store such an established quality level. As such, the establishing may include a priority sequence to obtain the LTO before other download sequences begin. The processor 210 of the navigation device 200 may request from the server 290, an LTO before reaching a standard expiry date in order to maintain TtFF times within a prescribed timeframe. The processor 210 of the navigation device 200 may request an LTO file for a planned destination location entered into the navigation device 200 by the user. Quality settings can include the time intervals and geographic regions of LTO files, and direct the navigation device modem 290 to server 302 activity through setting a code inside the navigation device 200.

Thereafter, the processor 210 can be tasked to make sure that the quality level is achieved. For example, once the navigation device 200 is powered on, the processor 210 can determine, in step S510 of Figure 5, an elapsed time from powering on of the navigation device to when the location of the navigation device is identified. Upon the processor 210 determining that the elapsed time is below the established time stored in memory 230 for example, then in step S520 of Figure 5, the processor 210 can instruct the receiver 320 (which may be part of an integrated transceiver 300 for example) to obtain information (via a network such as the internet for example), to improve the time in which to identify the location of the navigation device 200 upon powering on of the navigation device 200.

The information obtained by the receiver 320 may be, for example, an LTO file. Such a file may be download from a network, such as the internet for example (via modem 290 and transceiver 300 connecting the navigation device 200 to a network for example), to improve the "time to first fix". Current implementations rely on standard expiry times, and do take into consideration the degradation that occurs over time in LTO files. The QOS file includes numeric quality reference standards that the navigation device LTO file management must prescribe to. The QOS file is stored in memory 230, and is referenced by processor 210 when an LTO related activity is scheduled, or when a measured standard of either TtFF, connectivity, or QOS is breached, altered or approaching. The QOS determines the activity sequence, file update frequency, and predicative file management for planned routes.

Alternatively, the modem 290 and transceiver 300 may connect the navigation device 200 to the server 302 for download based on determined Quality settings. For example, a commercial use of the navigation device 200 may prioritize lower TtFF as highest need, in order to ensure the highest accuracy, and therefore (service) Quality, of the track and trace elements of navigation. This then requires more lower duration LTO files with a higher frequency of LTO requests, and the use of LTO destination file planning. In a consumer use of navigation device 200, prioritizes cost and ease of use, and therefore (cost) Quality of the Network connection and data download amounts. This then requires data optimized LTO file downloads, with data usage becoming a QOS calculation balancing TtFF performance. As such, LTO files would be updated less regularly and managed to avoid high data consumption, and download destination LTO files within a lower prices network connection.

Thus, in using a QOS reference file to determine LTO activity, upon the processor 210 determining that the elapsed TtFF time is below the established QOS reference time, of which the QOS reference file is stored in memory 230, a connection between the navigation device 200 and a network may be established to obtain the LTO information. In TtFF Management, the LTO file may then be executed to improve the elapsed time in a known manner, from powering on of the navigation device 200, in which to identify the location of the navigation device 200. In turn on of the navigation device 200 in a New Location, the acquired LTO file for the planned destination location may then be acquired by navigation device 290, and the modem 290 and transceiver 300 may then connect the navigation device 200 to the server 302 for download based on determined Quality settings, and the correct geographic LTO file, and correct file length.

In at least one embodiment, information is transmitted from between the navigation device 200 and the server 302 in the initial start-up sequence with a device type code as explained above, as part of the connection between the navigation device 200 and the server 302. If a destination location is entered in navigation device 200 (by a user selecting or otherwise inputting a desired destination for example), that is outside of the current Geo-zone of the navigation device 200, then an appropriate LTO file may be placed in a download sequence of the navigation device 200. In addition, information transmitted from the navigation device may be used to further identify the navigation device, such as intended vehicle usage and type for example, to determine the QOS settings, relating to the quality/cost calculation (for example, Time to First Fix/Network data costs. The QOS then, by category, may be used to determine mathematical accuracy and reliability in vehicle TtFF calculations.

In at least one embodiment, information is transmitted from between the navigation device 200 and the server 302 to further determine satellite location and reduce TtFF along the route of travel of the vehicle. The GPS chipset calculation may enable the navigation device 200 to determine and acquire a faster GPS fix. Using a simple rules based management system, the navigation device 200 may request LTO files from server 302, with variation in, for example: LTO File Request Frequency, LTO File length, and/or LTO File Geo-Coverage.

For example if a navigation device 200 user is currently in The Netherlands, and enters a route to Spain, the navigation device 200 may request a short LTO for the Netherlands region, and dependant on Network Coverage parameters, such as cost and proximity to network changes for example, the navigation device 200 may request a longer file for the Spain Region. The navigation device 200 can then manage LTO files, reduce to minimum network data costs, optimize TtFF calculations, and travel accurately based upon the received information.

In at least one embodiment, information is transmitted from between the navigation device 200 and the server 302 upon the navigation device 200 and/or server 302 determining device type, such as Commercial, Consumer (vehicle), Moto, and Pedestrian usage. A QOS File of the navigation device 200 and/or the server 302 may then set usage standards LTO File Information based on the device type category, and data obtained from navigation device 200 may then be used to determine TtFF behavior and expected Track and Trace availability, with enhanced accuracy and predictive methods due to increased signal availability. In at least one embodiment, once the Network Interface Protocol connection between the navigation device 200 and the server 302 is established, as part of the Protocol, the connection may be identified with a navigation device type. Implementation of the process shown in Figure 5 can be done by a processor 210 of the navigation device 200 in at least one other embodiment of the present application. For example, in at least one embodiment, a navigation device 200 can include a processor 210 to establish a time in which to identify an initial location of the navigation device 200 upon powering on the navigation device 200 and to determine an elapsed time, from powering on the navigation device 200, to identify the initial location of the navigation device 200; and a receiver 322 (part of transceiver 300 for example) to obtain information, to improve the time to identify a location upon powering on of a navigation device 200, upon the processor determining that the elapsed time is below the established time.

In an embodiment of the present application, a method includes establishing a minimum level for a parameter of quality of service of a navigation device 200; determining, upon powering on the navigation device 200, whether or not the navigation device 200 meets the established minimum level; and obtaining information, to aid the navigation device 200 in meeting the established minimum level, upon determining that the established minimum level was not met.

As shown in Figure 6, a method of an embodiment of the present application is first directed to establishing a minimum level in step S600 for a parameter of quality of service of a navigation device 200. Thereafter, upon powering on the navigation device 200, in step S610 the processor 210 determines whether or not the navigation device 200 meets the established minimum level. Finally, in step S620, information is obtained (via modem 290 and transceiver 300 connecting the navigation device 200 to a network for example) to aid the navigation device 200 in meeting the established minimum level, upon the processor 210 determining that the established minimum level is not met.

For example, in an embodiment of the present application, a minimum level for a quality of service (QOS) parameter may be established. This can include, for example, identifying how fast, from power turn on, it should take to identify a location of the navigation device 200 (first to fix), for example. Further, the memory 230 and processor 210 of the navigation device 200 may be coded to store such an established minimum QOS level.

For example, in commercial use, TtFF has a quantitative cost association, subscription payments are taken to by service provider to guarantee a service. If TtFF is taking, for example, .05 percent of the overall drive time, then the service has a downtime of .05 percent. Higher frequency and shorter duration LTO files reduce this downtime at a cost of higher Network data usage. Therefore, one of the main QOS standards may be initial time to signal acquisition (TtFF), related to cost functions, and as a QOS measurement, stored within the QOS File, stored on memory 230. This relationship may be expressed as a TtFF/cost relationship, and can produce a numerical reference. Further, this numerical reference, stored in the memory 230 and used in processor 210 of the navigation device 200, may be referenced to determine LTO file duration and frequency, as well as network prioritization, data sequence planning, and destination location LTO file attributes.

As such, the QOS file may be coded to store such an established minimum Ttff/cost QOS level. This relationship can vary dependant on use category; for example; High priority, commercial, consumer, pedestrian, etc. The higher the QOS setting, the higher the Service quality guarantee, and as such the higher the value is to the end user. As such, the establishing of a user type, may include setting a user related code inside the navigation device 200.

Thus, in one embodiment, the processor 210 can be tasked to make sure that the minimum QOS level is achieved. For example, once the navigation device 200 is powered on, the processor 210 can determine an elapsed time, from powering on of the navigation device 200, to when the location of the navigation device 200 is identified and can determine whether or not the elapsed time is below the minimum QOS level stored in memory 230 for example. Upon the processor 210 determining that the elapsed time is below the minimum QOS level stored in memory 230 for example, then the processor 210 can instruct the receiver 320 (which may be part of an integrated transceiver 300 for example) to obtain information (via a network such as the internet for example), to aid the navigation device 200 in meeting the established minimum level. For example, such information can be used to improve the time in which to identify the location of the navigation device 200 upon powering on of the navigation device 200. As such, the quality of service parameter may involve elapsed time before determining an initial position of the navigation device 200 upon powering on the navigation device 200.

The information obtained by the receiver 320 may be, for example, an LTO file. Such a file may be download from a network, such as the internet for example (via modem 290 and transceiver 300 connecting to the internet for example), to improve the "time to first fix".

Alternatively, the modem 290 and transceiver 300 may connect the navigation device 200 to the server 302 for download of information such as the LTO file. Thus, upon the processor 210 determining that the elapsed time is below the minimum QOS level stored in memory 230, a connection between the navigation device 200 and a network may be established to obtain the information. In either event, the LTO file may the be executed to improve the elapsed time in a known manner, from powering on of the navigation device 200, in which to identify the location of the navigation device 200. Thus, upon determining that the elapsed time is below the established time, and thus determining that the established minimum level was not met, a connection may be established between the navigation device 200 and a network to obtain the information

implementation of the process shown in Figure 6 can be done by a processor 210 of the navigation device 200 in at least one other embodiment of the present application. For example, in at least one embodiment, a navigation device 200 can include a processor 210 to establish a minimum level for a parameter of quality of service of a navigation device 200 and to determine, upon powering on the navigation device 200, whether or not the navigation device 200 meets the established minimum level; and a receiver 322 (part of transceiver 300 for example) to obtain information, to aid the navigation device 200 in meeting the established minimum level, upon the processor 210 determining that the established minimum level was not met.

The methods of at least one embodiment expressed above may be implemented as a computer data signal embodied in the carrier wave or propagated signal that represents a sequence of instructions which, when executed by a processor (such as processor 304 of server 302, and/or processor 210 of navigation device 200 for example) causes the processor to perform a respective method. In at least one other embodiment, at least one method provided above may be implemented above as a set of instructions contained on a computer readable or computer accessible medium, such as one of the memory devices previously described, for example, to perform the respective method when executed by a processor or other computer device. In varying embodiments, the medium may be a magnetic medium, electronic medium, optical medium, etc.

Even further, any of the aforementioned methods may be embodied in the form of a program. The program may be stored on a computer readable media and is adapted to perform any one of the aforementioned methods when run on a computer device (a device including a processor). Thus, the storage medium or computer readable medium, is adapted to store information and is adapted to interact with a data processing facility or computer device to perform the method of any of the above mentioned embodiments.

The storage medium may be a built-in medium installed inside a computer device main body or a removable medium arranged so that it can be separated from the computer device main body. Examples of the built-in medium include, but are not limited to, rewriteable non-volatile memories, such as ROMs and flash memories, and hard disks. Examples of the removable medium include, but are not limited to, optical storage media such as CD-ROMs and DVDs; magneto-optical storage media, such as MOs; magnetism storage media, including but not limited to floppy disks (trademark), cassette tapes, and removable hard disks; media with a built-in rewriteable non-volatile memory, including but not limited to memory cards; and media with a built-in ROM, including but not limited to ROM cassettes; etc. Furthermore, various information regarding stored images, for example, property information, may be stored in any other form, or it may be provided in other ways.

As one of ordinary skill in the art will understand upon reading the disclosure, the electronic components of the navigation device 200 and/or the components of the server 302 can be embodied as computer hardware circuitry or as a computer readable program, or as a combination of both. The system and method of embodiments of the present application include software operative on the processor to perform at least one of the methods according to the teachings of the present application. One of ordinary skill in the art will understand, upon reading and comprehending this disclosure, the manner in which a software program can be launched from a computer readable medium in a computer based system to execute the functions found in the software program. One of ordinary skill in the art will further understand the various programming languages which may be employed to create a software program designed to implement and perform at least one of the methods of the present application.

The programs can be structured in an object-orientation using an object-oriented language including but not limited to JAVA, Smalltalk, C++, etc., and the programs can be structured in a procedural-orientation using a procedural language including but not limited to COBOL, C, etc. The software components can communicate in any number of ways that are well known to those of ordinary skill in the art, including but not limited to by application of program interfaces (API), interprocess communication techniques, including but not limited to report procedure call (RPC), common object request broker architecture (CORBA), Component Object Model (COM), Distributed Component Object Model (DCOM), Distributed System Object Model (DSOM), and Remote Method Invocation (RMI). However, as will be appreciated by one of ordinary skill in the art upon reading the present application disclosure, the teachings of the present application are not limited to a particular programming language or environment.

The above systems, devices, and methods have been described by way of example and not by way of limitation with respect to improving accuracy, processor speed, and ease of user interaction, etc. with a navigation device 200.

Further, elements and/or features of different example embodiments may be combined with each other and/or substituted for each other within the scope of this disclosure and appended claims.

Still further, any one of the above-described and other example features of the present invention may be embodied in the form of an apparatus, method, system, computer program and computer program product. For example, of the aforementioned methods may be embodied in the form of a system or device, including, but not limited to, any of the structure for performing the methodology illustrated in the drawings.

Example embodiments being thus described, it will be obvious that the same may be varied in many ways. Such variations are not to be regarded as a departure from the scope of the present invention as long as they fall within the scope of the following claims.

## Claims

1. A method, comprising:
establishing a minimum level for a parameter of quality of service (QOS) of a navigation device (200), the parameter identifying a time to first fix (TtFF);
determining, upon powering on the navigation device, whether or not the navigation device meets the established minimum level; and
obtaining information, to aid the navigation device in meeting the established minimum level, upon determining that the established minimum level was not met, wherein obtaining information comprises establishing a connection with and downloading a first long term orbit (LTO) file from a network including a server (302);
entering a destination location in the navigation device; and
placing a request for at least one further LTO file in a download sequence of the navigation device, if the destination location is outside of the current geo-zone of the navigation device;
wherein said further LTO file is different from the first LTO file in at least one of file request frequency, file length, and file geo-coverage.

2. The method of claim 1, wherein the quality of service parameter involves time elapsed before determining a position of the navigation device upon powering on the navigation device.

3. The method of any one of preceding claims, wherein the establishing of a connection includes setting a code inside the navigation device.

4. The method of claim 3, wherein information is transmitted between the navigation device and the server in an initial start-up sequence incorporating the code set inside the navigation device.

5. The method of claim 4, wherein the information transmitted is used to further identify at least one of the navigation device, the type thereof, the intended vehicle usage for the navigation device and intended vehicle type for the navigation device, and is used to determine quality of service (QOS) settings relating to a quality to cost calculation of the navigation device.

6. The method of claim 5, wherein the information is used to determine Time to First Fix to network data cost calculation of the navigation device.

7. The method of claim 6, wherein the information transmitted is used to determine satellite location and reduce TtFF along the route of travel of the vehicle.

8. The method of claim 7, wherein a GPS chipset calculation of the navigation device enables the navigation device to determine and acquire a relatively faster GPS fix using a rules based management system and to request LTO files from the server with variation in at least one of LTO file request frequency, LTO file length, and LTO file geographic coverage.

9. The method of claim 5, wherein the vehicle type is at least one of commercial, consumer, motorcycle, and pedestrian.

10. The method of claim 5, wherein usage standards LTO file information is set based on the determined vehicle type, and wherein data obtained from navigation device is used to then determine time to first fix (TtFF) behavior and expected Track and Trace availability, with enhanced accuracy and predictive methods due to increased signal availability.

11. The method of any one of preceding claims, wherein a Network Interface Protocol connection is established between the navigation device and the server.

12. The method of claim 11 wherein the connection is identified with a type of the navigation device, as part of the Network Interface Protocol.

13. A navigation device (200) adapted to perform any of the methods of claims 1 to 12, comprising:
a processor (210) to establish a minimum level for a parameter of quality of service of a navigation device (200), said parameter being a time to first fix (TtFF); and to determine, upon powering on the navigation device (200), whether or not the navigation device (200) meets the established minimum level;
a receiver (322) to obtain information, to aid the navigation device (200) in meeting the established minimum level, upon the processor (210) determining that the established minimum level was not met; wherein obtaining information comprises downloading a first long term orbit (LTO) file; and
an input device (220) to enter a destination location;
wherein the processor (210) is further arranged to place a request for at least one further LTO file in a download sequence of the navigation device (200), if the destination location is outside of the current geo-zone of the navigation device; and
wherein the further LTO file is different from the first LTO file in at least one of: file request frequency; file length, and file geo-coverage.

14. The navigation device (200) according to claim 13, further comprising a transmitter (320) by means of which information can be transmitted from the device to a network.

## Patentansprüche

1. Verfahren, das Folgendes umfasst:
Festlegen einer Mindesthöhe für einen Parameter der Dienstgüte (QOS) einer Navigationseinrichtung (200), wobei der Parameter eine Zeit bis zur ersten Positionseingabe (TtFF) identifiziert;
Bestimmen beim Einschalten der Navigationseinrichtung, ob die Navigationseinrichtung die festgelegte Mindesthöhe erfüllt oder nicht erfüllt; und
Erhalten von Informationen, zum Unterstützen der Navigationseinrichtung beim Erfüllen der festgelegten Mindesthöhe, beim Bestimmen, dass die festgelegte Mindesthöhe nicht erfüllt wurde, wobei das Erhalten von Informationen das Herstellen einer Verbindung mit einem und Downloaden einer ersten Long Term Orbit(LTO)-Datei von einem einen Server (302) enthaltenden Netzwerk umfasst;
Eingeben eines Zielorts in die Navigationseinrichtung; und
Platzieren einer Anforderung für mindestens eine weitere LTO-Datei in einer Downloadsequenz der Navigationseinrichtung, falls sich der Zielort außerhalb der aktuellen Geozone der Navigationseinrichtung befindet;
wobei die weitere LTO-Datei von der ersten LTO-Datei bezüglich der Dateianforderungshäufigkeit und/oder der Dateilänge und/oder der Datei-Geoabdeckung verschieden ist.

2. Verfahren nach Anspruch 1, wobei der Dienstgüteparameter die verstrichene Zeit vor dem Bestimmen einer Position der Navigationseinrichtung beim Einschalten der Navigationseinrichtung umfasst.

3. Verfahren nach einem der vorhergehenden Ansprüche, wobei das Herstellen einer Verbindung das Einstellen eines Codes innerhalb der Navigationseinrichtung beinhaltet.

4. Verfahren nach Anspruch 3, wobei Informationen zwischen der Navigationseinrichtung und dem Server in einer Anfangshochfahrsequenz mit dem in der Navigationseinrichtung eingestellten Code übertragen werden.

5. Verfahren nach Anspruch 4, wobei die übertragenen Informationen dazu verwendet werden, weiterhin die Navigationseinrichtung und/oder ihren Typ und/oder die beabsichtigte Fahrzeugnutzung für die Navigationseinrichtung und/oder den beabsichtigten Fahrzeugtyp für die Navigationseinrichtung zu identifizieren, und verwendet werden, um QOS-Einstellungen bezüglich einer Qualitäts-Kosten-Berechnung der Navigationseinrichtung zu bestimmen.

6. Verfahren nach Anspruch 5, wobei die Informationen zum Bestimmen einer TtFF zur Netzwerkdaten-Kosten-Berechnung der Navigationseinrichtung verwendet werden.

7. Verfahren nach Anspruch 6, wobei die übertragenen Informationen zum Bestimmen eines Satellitenorts und Reduzieren der TtFF entlang der Reiseroute des Fahrzeugs verwendet werden.

8. Verfahren nach Anspruch 7, wobei es eine GPS-Chipsatzberechnung der Navigationseinrichtung der Navigationseinrichtung ermöglicht, einen relativ schnelleren GPS-Fix unter Verwendung eines regelbasierten Managementsystems zu bestimmen und zu erfassen und LTO-Dateien von dem Server mit einer Variation bei der LTO-Dateianforderungshäufigkeit und/oder der LTO-Dateilänge und/oder der geographischen LTO-Dateiabdeckung anzufordern.

9. Verfahren nach Anspruch 5, wobei der Fahrzeugtyp ein Nutzfahrzeug und/oder Verbraucherfahrzeug und/oder Motorrad und/oder Fußgänger ist.

10. Verfahren nach Anspruch 5, wobei Nutzungsstandards-LTO-Datei-Informationen auf der Basis des bestimmten Fahrzeugtyps eingestellt werden und wobei von der Navigationseinrichtung erhaltene Daten dazu verwendet werden, dann das TtFF-Verhalten und die erwartete Ortungs- und Verfolgungs-Verfügbarkeit mit aufgrund der vergrößerten Signalverfügbarkeit verbesserter Genauigkeit und prädiktiven Verfahren zu bestimmen.

11. Verfahren nach einem der vorhergehenden Ansprüche, wobei eine Netzwerkschnittstellenprotokollverbindung zwischen der Navigationseinrichtung und dem Server hergestellt wird.

12. Verfahren nach Anspruch 11, wobei die Verbindung mit einem Typ der Navigationseinrichtung als Teil des Netzwerkschnittstellenprotokolls identifiziert wird.

13. Navigationseinrichtung (200), die ausgelegt ist zum Durchführen eines beliebigen der Verfahren nach den Ansprüchen 1 bis 12, umfassend:
einen Prozessor (210) zum Festlegen einer Mindesthöhe für einen Parameter der Dienstgüte einer Navigationseinrichtung (200), wobei der Parameter eine TtFF ist; und zum Bestimmen beim Einschalten der Navigationseinrichtung (200), ob die Navigationseinrichtung (200) die festgelegte Mindesthöhe erfüllt oder nicht erfüllt;
einen Empfänger (322) zum Erhalten von Informationen, zum Unterstützen der Navigationseinrichtung (200) beim Erfüllen der festgelegten Mindesthöhe, wenn der Prozessor (210) bestimmt, dass die festgelegte Mindesthöhe nicht erfüllt wurde; wobei das Erhalten von Informationen das Downloaden einer ersten LTO-Datei umfasst; und
eine Eingabeeinrichtung (220) zum Eingeben eines Zielorts;
wobei der Prozessor (210) weiterhin ausgelegt ist zum Platzieren einer Anforderung für mindestens eine weitere LTO-Datei in einer Downloadsequenz der Navigationseinrichtung (200), falls sich der Zielort außerhalb der aktuellen Geozone der Navigationseinrichtung befindet; und
wobei die weitere LTO-Datei von der ersten LTO-Datei bezüglich der Dateianforderungshäufigkeit und/oder der Dateilänge und/oder der Datei-Geoabdeckung verschieden ist.

14. Navigationseinrichtung (200) nach Anspruch 13, weiterhin umfassend einen Sender (320), mithilfe dessen Informationen von der Einrichtung zu einem Netzwerk übertragen werden können.

## Revendications

1. Procédé comprenant les étapes consistant à :
établir un niveau minimal pour un paramètre de qualité de service (QOS) d'un dispositif de navigation (200), le paramètre identifiant le temps nécessaire à la détermination d'un premier point (TtFF) ;
déterminer, lors de la mise en service du dispositif de navigation, si le dispositif de navigation répond ou non au niveau minimal établi ; et
obtenir des informations, pour aider le dispositif de navigation à répondre au niveau minimal établi, sur la détermination que le niveau minimal établi n'a pas été rencontré, dans lequel l'obtention d'informations comprend l'établissement d'une liaison avec un premier fichier d'orbite à long terme (LTO) d'un réseau comprenant un serveur (302) et le téléchargement de ce fichier ;
saisir un emplacement de destination dans le dispositif de navigation ; et
effectuer une demande pour au moins un autre fichier LTO dans une séquence de téléchargement du dispositif de navigation pour savoir si l'emplacement de destination est en dehors de la zone géographique courante du dispositif de navigation ;
dans lequel ledit autre fichier LTO est différent du premier fichier LTO dans au moins un domaine choisi parmi la fréquence de demande de fichiers, la longueur des fichiers et la couverture géographique des fichiers.

2. Procédé selon la revendication 1, dans lequel le paramètre de qualité de service implique le temps qui s'est écoulé avant de déterminer une position du dispositif de navigation lors de la mise en service de celui-ci.

3. Procédé selon l'une quelconque des revendications précédentes, dans lequel l'établissement d'une liaison comprend le réglage d'un code à l'intérieur du dispositif de navigation.

4. Procédé selon la revendication 3, dans lequel des informations sont transmises entre le dispositif de navigation et le serveur dans une séquence de lancement initiale incorporant le code réglé à l'intérieur du dispositif de navigation.

5. Procédé selon la revendication 4, dans lequel les informations transmises sont utilisées pour encore identifier au moins l'un des éléments choisis parmi le dispositif de navigation, son type, l'usage prévu du véhicule pour le dispositif de navigation et le type prévu de véhicule pour le dispositif de navigation, et sont utilisées pour déterminer des réglages de la qualité de service (QOS) se rapportant à un calcul de la qualité en fonction du coût dans le dispositif de navigation.

6. Procédé selon la revendication 5, dans lequel les informations sont utilisées pour déterminer le temps du premier point en termes de calculs du coût des données du réseau dans le dispositif de navigation.

7. Procédé selon la revendication 6, dans lequel les informations transmises sont utilisées pour déterminer l'emplacement du satellite et réduire le TtFF le long de la route de déplacement du véhicule.

8. Procédé selon la revendication 7, dans lequel un calcul de chipset GPS du dispositif de navigation permet au dispositif de navigation de déterminer et d'acquérir un point GPS relativement plus rapide en utilisant un système de gestion basé sur des règles et de demander des fichiers LTO au serveur avec une variation dans au moins un élément choisi parmi la fréquence de demande de fichiers LTO, la longueur des fichiers LTO et la couverture géographique des fichiers LTO.

9. Procédé selon la revendication 5, dans lequel le type de véhicule est au moins un type de véhicule choisi parmi un véhicule commercial, un véhicule personnel, un motocycle et à pied.

10. Procédé selon la revendication 5, dans lequel l'utilisation d'informations standard sur les fichiers LTO est réglée sur la base du type de véhicule déterminé et dans lequel les données tirées du dispositif de navigation sont utilisées pour ensuite déterminer le comportement en matière de temps du premier point (TtFF) et la disponibilité de suivi et de trace attendue, avec une précision renforcée et des procédés prédictifs en raison de la disponibilité accrue de signaux.

11. Procédé selon l'une quelconque des revendications précédentes, dans lequel une liaison de protocole d'interface de réseau est établie entre le dispositif de navigation et le serveur.

12. Procédé selon la revendication 11, dans lequel la liaison est identifiée avec un type du dispositif de navigation en tant que partie du protocole d'interface de réseau.

13. Dispositif de navigation (200) qui est à même d'effectuer l'un quelconque des procédés des revendications 1 à 12, comprenant :
un processeur (210) pour établir un niveau minimal pour un paramètre de qualité de service d'un dispositif de navigation (200), ledit paramètre étant destiné à déterminer un temps de premier point (TtFF) ; et pour déterminer, lors de la mise en service du dispositif de navigation (200), si le dispositif de navigation (200) répond ou non au niveau minimal établi ;
un récepteur (322) pour obtenir des informations, pour aider le dispositif de navigation (200) à répondre au niveau minimal établi, sur le processeur (210) déterminant que le niveau minimal établi n'a pas été rencontré ; dans lequel l'obtention d'informations comprend le téléchargement d'un premier fichier d'orbite à long terme (LTO) ; et
un dispositif d'entrée (220) pour saisir un emplacement de destination ;
dans lequel le processeur (210) est encore aménagé pour effectuer une demande pour au moins un autre fichier LTO dans une séquence de téléchargement du dispositif de navigation (200), si l'emplacement de destination est en dehors de la zone géographique courante du dispositif de navigation ; et
dans lequel l'autre fichier LTO est différent du premier fichier LTO dans au moins l'un des domaines suivants : la fréquence de demande de fichiers ; la longueur des fichiers et la couverture géographique des fichiers.

14. Dispositif de navigation (200) selon la revendication 13, comprenant par ailleurs un émetteur (320) au moyen duquel des informations peuvent être transmises du dispositif à un réseau.
